# EUROPEAN PATENT SPECIFICATION

(11) **EP 4 368 015 B1**
(45) Date of publication and mention of the grant of the patent: **22.07.2026**
(21) Application number: 23020419.0
(22) Date of filing: 05.09.2023
(51) Int. Cl.: A01G 9/24, B01D 5/00, E03B 3/28, F28B 1/00, F24F 3/14

(54) **AUTOMATED INSTALLATION FOR COLLECTING ATMOSPHERIC HUMIDITY**
AUTOMATISIERTE ANLAGE ZUR ERFASSUNG VON LUFTFEUCHTIGKEIT
INSTALLATION AUTOMATISÉE DE COLLECTE D'HUMIDITÉ ATMOSPHÉRIQUE

(30) Priority: 09.11.2022 RO 202200713
(43) Date of publication of application: 15.05.2024
(73) Proprietor: Institutul National de Cercetare- Dezvoltare Pentru Masini si Instalatii destinate Agriculturii si Industriei Alimentare - INMA, 013813 Bucuresti (RO)
(72) Inventor: Manea, Dragos, Bucharest (RO); Marin, Eugen, Bucharest (RO); Mateescu, Marinela, Bucharest (RO); Gheorghe, Gabriel-Valentin, Bucharest (RO); Vasilachi, Carmen, Bucharest (RO); Dumitru, Florin, sat Tancabesti (com. Snagov) (RO)
(74) Representative: Strenc, Alexandru Cristian

(56) References cited:
- FR-A3- 3 010 775
- GB-A- 2 284 746
- JP-A- S5 752 729

## Description

The invention relates to an automated installation for collecting atmospheric humidity, intended to obtain an additional amount of water for the irrigation of vegetable crops grown in greenhouses or solariums.

It is known the solution in the patent document GB2284746A which refers to an apparatus for obtaining moisture from a living plant that has an air enclosure, air circulation means and moisture extraction means, moisture that is transpired by a plant. Air is circulated around a plant by the air circulation means and carries the moisture into the moisture extraction means. The moisture extraction means extracts moisture from the air, for example by condensation, and the moisture is collected.

Some limitations or disadvantages could be foreseen when implementing this solution. It extracts humidity only from the air in a closed enclosure where plants are grown, and thus the humidity source is exhaustible without an additional supply of water brought by irrigating the plants. Also, the moisture is extracted from the air by condensation on the surface of a flat plate, cooled with a heat pump, which requires a large consumption of electricity. The automatic control system is not provided with a physical means/transducer enabling the real-time measurement of the temperature of the condensing plate, but is based only on algorithms or reference values stored in its memory.

The invention in the document FR3010775A3 is particularly intended for the irrigation of spaces where water is rare or even non-existent and/or for the water supply of the population and relates to a device for recovering water from air overloaded with humidity entering a greenhouse through some openings. The air is sucked in by a humidity extractor equipped with a timer connected to the solar panel by a cable. A duct takes the hot air to the cold room comprising a refrigeration motor with thermostat powered by the solar panel. This air attaches to some stainless steel wall to form mist transforming into water which flows over pebbles representing the first natural filter. The water penetrating into the sand layer (15) under the pebbles forms the second natural filter. Then, the water flows over a plastic film placed under the layer of sand. Finally, the water passes through an airlock serving as the cover of a well which collects the water. The other quantity of water covers the entire surface of the plastic film where seeds (grass or others) are sown for greenery.
The solution however is based only on processing the difference between the humidity and temperature of the air drawn from outside the greenhouse and the temperature of the air in the cold room which limits its area of utility and does not provides an automation system to ensure real-time monitoring and control of the humidity collection process. Instead, has a discontinuous operation, the hot air aspirator (extractor) operating for short periods of 20 minutes, controlled by a timer. The external unit where the condensing plates/collector walls are placed is built in the form of a closed room with brick walls, which implies the realization of an expensive construction.

It is equally known the technical solution from the patent document US 6828499 B2 "Apparatus and method for harvesting atmospheric moisture" published on 07.12.2004, which refers to a passive condensation panel, used to collect atmospheric moisture during those times of the diurnal cycle when the relative humidity is close of 100%. The panel has three main parts: a photovoltaic section, a cooling section and a battery energy storage section. The Surface on which the condensation takes place is coated with suitable hydrophilic and hydrophobic materials disposed so as to promote the condensation and flow and collection of condensing water along channel ways.

The disadvantage of this method and the apparatus is that it uses a miniaturized conventional cooling system that contains a fluid coolant that can leak, resulting in frequent apparatus failure.

It is known the technical solution from the patent document US 6945063 B2 "Apparatus and method for harvesting atmospheric moisture" published on 20.09.2005, which refers to a method and apparatus for obtaining high quality water, of distilled water character and in which virtually no dissolved solids are present, by using a passive system for harvesting atmospheric moisture.

The apparatus includes two main parts namely: one or more water vapor condensation and collection members each having a surface upon which water is condensed and collected and an energy gathering member such as a photovoltaic panel that produces electricity to power condensation-driving refrigeration. An air passage is formed between the photovoltaic member and the condensation member, and additional air passages are formed between condensation members where there are more than one condensation member. High relative humidity air passes through the air passage or passages, where it is cooled. Water vapor from the cooled air, which becomes supersaturated with moisture, thus condenses onto the condensation member. The condensed water flows under the force of gravity off the condensation member and is collected in a separate container.

The disadvantage of this apparatus and related method is that it requires high energy consumption to cool the condensing element with conventional fluid cooling system.

In addition to the disadvantages mentioned above for each individual apparatus, the major disadvantage of these methods and apparatus is that they do not provide real-time monitoring and control of the atmospheric humidity collection process.

The technical problem that the invention aims to solve consists in creating an installation in which the collection of atmospheric humidity is carried out automatically, with low consumption of electricity.

The invention is achieved with the appended claims.

The automated installation for collecting atmospheric humidity, according to the invention, solves this technical problem and removes the mentioned disadvantages, in that it is composed of a control block that acquires electrical signal information from some humidity and temperature transducers and that includes a software for real-time monitoring and control of the work process, in which combinations of reference values of temperature and air humidity are predefined, corresponding to the optimal conditions for moisture from the atmosphere to condense on the surface of collecting walls and which operate based on a logical algorithm.

The automated installation for collecting atmospheric humidity has the following advantages:
- ensures real-time monitoring and control of the atmospheric humidity collection process;
- uses equipment with low electricity consumption (e.g. recirculation pumps, duct fan, servomotor);
- uses cooled water in a coil of copper pipes located underground to cool the surface of the condensing elements (collector walls);
- it is simple from a constructive point of view.

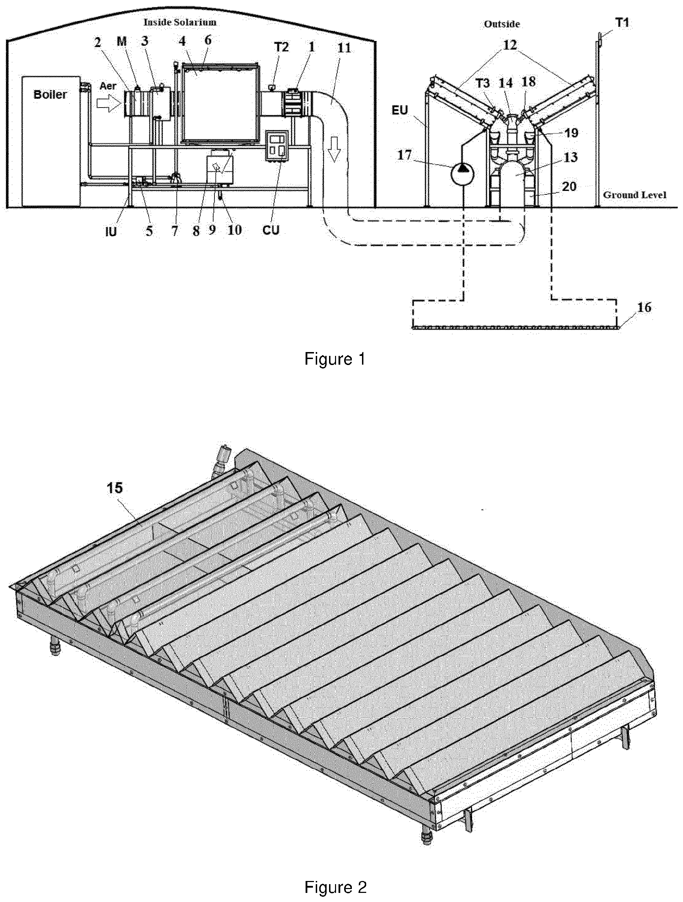

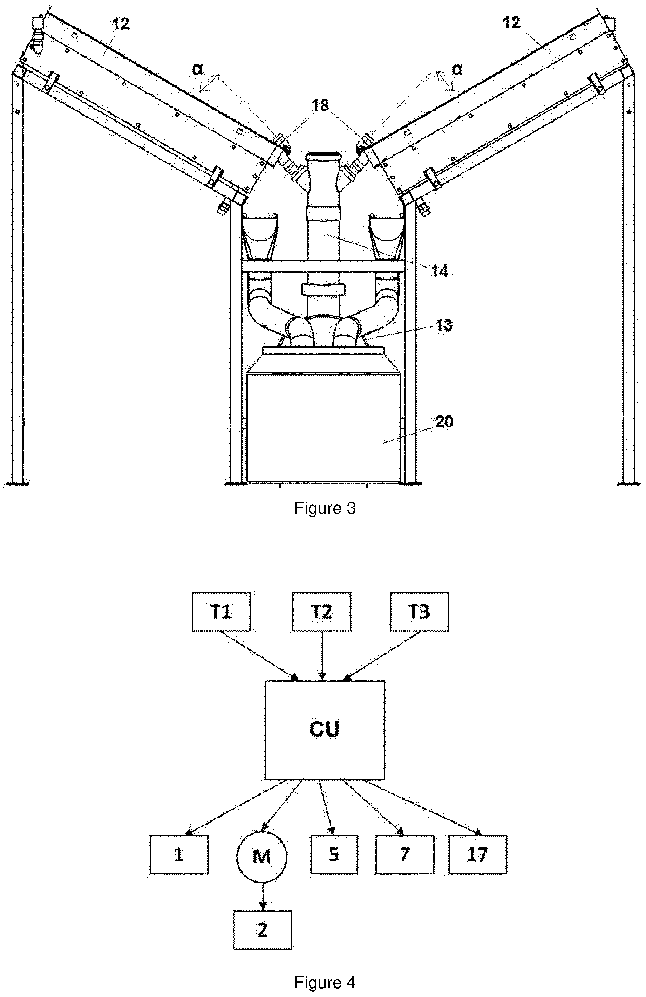

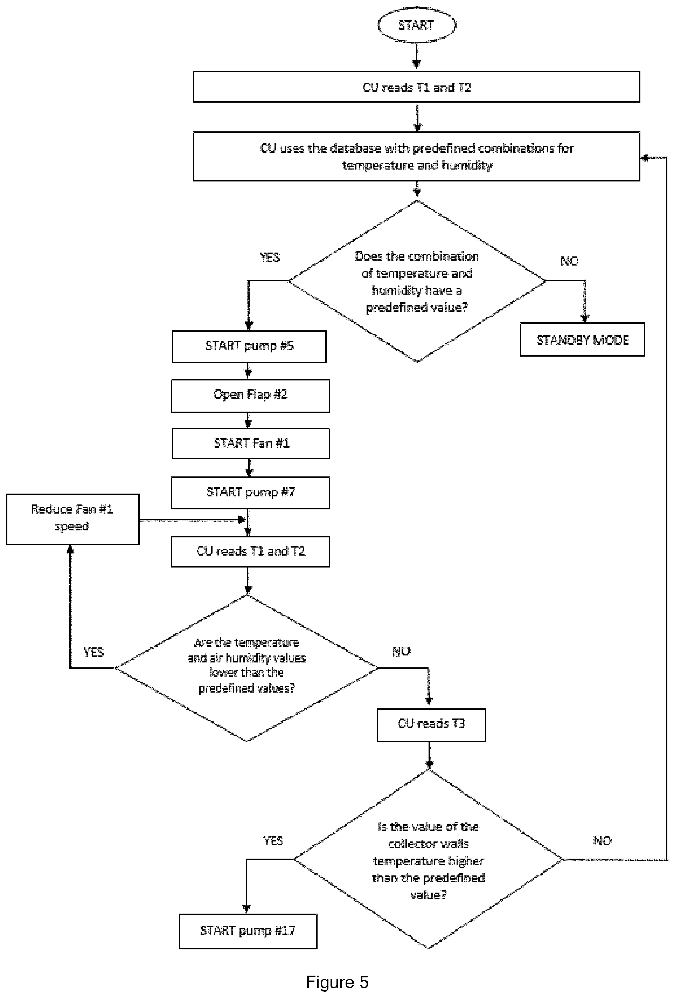

An embodiment of the invention is shown in connection with Figs. 1-5, which represent:
- -Fig.1: - Automated installation for collecting atmospheric humidity - installation diagram;
- -Fig.2: - Automated installation for collecting atmospheric humidity - 3D representation of a collector wall;
- -Fig.3: - Automated installation for collecting atmospheric humidity - the adjustment diagram of the air jets exit angle in relation to the surface of the collector walls;
- -Fig.4: - Automated installation for collecting atmospheric humidity - automation block diagram;
- -Fig.5: - Automated installation for collecting atmospheric humidity - diagram of the installation operation logical algorithm.

The automated installation for collecting atmospheric humidity, according to the invention, consists of a unit (IU) that is located inside a vegetable solarium, a unit (EU) that is located outside, in the vicinity of the solarium, and a system for monitoring and automatic control of the work process.

The installation uses water heated in a known system with solar panels with vacuum tubes and storage boiler. The installation is powered by photovoltaic panels with energy storage in batteries.

At the level of the unit (IU), the air from the vegetable solarium drawn in by a duct fan (1) of variable flow, passes through an air flow control flap (2) operated by a servomotor (M), a battery (3) for hot water heating and a humidification chamber (4). Through a round-trip circuit, the hot water from the boiler is recirculated through the battery (3) by a recirculation pump (5). In the upper part of the humidification chamber (4) there are some nozzles (6) for spraying hot water in the form of mist, in connection with a pressure pump (7), which takes the hot water from the boiler. The shape of the humidification chamber (4) at the bottom allows the excess water to drain into a tank (8), inside which there is an electric float (9). When the water accumulated in the tank (8) reaches a certain level, the electric float (9) commands the opening of a solenoid valve (10), the water being taken up by the recirculation pump (5) and transferred back to the boiler. All elements of the unit (UI) are mounted on a non-positioned metal frame.

The unit (IU) is connected underground to the unit (EU ) by means of a flexible insulated tube (11) made of layers of aluminium foil and aluminized polyester. The unit (UE) is composed of a frame on which are mounted in the shape of the letter "V" two collector walls (12) placed symmetrically left-right in relation to a horizontal tube (13) provided with some vertical tubes (14). The surfaces of the collector walls (12) are made of stainless steel sheet profiled in "V"-shaped alveoli, in order to increase the area for obtaining condensation. In contact with the inner faces of the collector walls are coils (15) of copper pipes. The water cooled in another coil (16) of copper pipes placed horizontally underground, is recirculated through the coils (15) by another recirculation pump (17), the temperature of the cooled water helping to lower the temperature of the collector wall surfaces. Each vertical tube (14) has two branches at the top facing the collector walls (12). In each branch, some elbows (18) are mounted that can rotate around their own axes, to adjust the exit angle (α) of the air jets in relation to the surface of the collector walls (12). At one end, the horizontal tube (13) is connected with the flexible tube (11), and at the other end it is closed with a plug. At the bottom of the collector walls (12) there are some gutters (19), which collect the water drained from the surface of the collector walls and direct it into the collection tank (20).
By enabling the extracting of humidity both from the air inside and outside the solarium, and by using water heated in the system with solar panels and a storage boiler, for a temperature and humidity intake in order to increase the difference in temperature and humidity between inside and outside, the installation increases the amount of water obtained by condensation,

A control unit (CU) acquires the following electrical signal type information: humidity and temperature of the atmosphere from a transducer (T1) placed on a support outside, air humidity and temperature at the exit of the indoor unit (IU) from a transducer (T2) located on the pipe and the temperatures of the surfaces of the collector walls (12) from some contact transducers (T3) with magnetic fixation. The control unit (CU) includes a software for monitoring and controlling the work process, in which combinations of reference values of air temperature and humidity are predefined, corresponding to the optimal conditions, for the humidity from the atmosphere to condense on the surface of the collector walls (reaching the dew point) and which operates according to a logical algorithm.

The control unit (CU) reads the transducers (T1) and (T2) and if the optimal conditions are met, it commands: the start of the hot water recirculation pump (5), the opening of the air flow control flap (2) by actuating the servo motor (M), starting the fan (1) at rated speed and starting the pressure pump (7). If the combination of air temperature and humidity falls below a predefined value, i.e. the air in the internal unit (IU) does not have time to warm up and humidify due to the too high flow rate pushed by the fan (1), the control unit (CU) commands reducing the speed of the fan (1) and partially closing the flap (2) regulating the air flow.

The control unit (CU) reads the transducers (T3) which transmitte information in real time on the temperature of the collector wall surface so that if the temperature of the collector wall surfaces becomes higher than a predefined value, it commands the start of the recirculation pump (17), the water being recirculated from the underground coil (16) to the coils (15) of the collector walls, and thus optimizing the operation of the installation.

Due to the difference in temperature and humidity between the air flow generated by the installation and the atmospheric air, the water vapours condense on the surface of the collector walls, the water being collected in the tank (20), from where it can be used to irrigate the vegetable crops in the solarium.

The installation continues to operate until the combinations of air temperature and humidity values reach levels that no longer satisfy the conditions for atmospheric humidity condensation. Then the control unit (CU) commands in the following order: stop the recirculation pump (5), close the air flow control flap (2), stop the fan (1), stop the pressure pump (7) and stop the recirculation pump (17).

In climate zones where the relative humidity of the air is high throughout the day-night cycle, water can be condensed and collected, according to the invention, both day and night.

In climate zones where the air tends to have low relative humidity during the day, the relative humidity typically rises at night to nearly 100%. Thus, the best efficiency of the installation is obtained during the nights, when the difference in temperature and humidity between the atmospheric air and the air in the installation is significant.

## Claims

1. Automated installation for collecting atmospheric humidity that uses water heated in a known system with solar panels with vacuum tubes and storage boiler and is powered by photovoltaic panels with energy storage in batteries,
comprising
a unit (IU) located inside a vegetable solarium,
a unit (EU) located outside, in the vicinity of the solarium, made up of two collector walls mounted in the shape of the letter "V" on a frame and placed symmetrically left-right in relation to a horizontal tube provided with some vertical tubes and
the EU unit collecting humidity both from the air inside and outside the solarium, and the IU unit using water heated in the system with solar panels and a storage boiler, for generating an air flow providing a temperature and humidity intake in order to satisfy a difference in temperature and humidity between inside and outside and thus satisfy the conditions for atmospheric humidity condensation, respectively a control unit (CU) with a monitoring and control software running, aimed to automatically collect atmospheric humidity,
in which combinations of reference values of air temperature and humidity are predefined corresponding to reaching the dew point, and
which operates according to a logical algorithm, acquires electrical signal type information from a humidity and temperature transducer (T1) placed on a support outside, from a humidity and temperature transducer (T2) located at the outlet of the unit (IU) piping, from some temperature transducers (T3) in contact with the collector wall surfaces,
which transmit electrical signals to the control unit (CU) and thus optimizing the operation of the installation, by transmitting information in real time on the temperature of the collector wall surface,, processes this information and
if the predefined conditions for the condensation of humidity from the atmosphere on the surface of the collecting walls are met (12), it commands starting the components of the unit (IU), so that due to the difference in temperature and humidity between the air flow generated by the unit (IU), the atmospheric air, the temperature of the collector walls, the water vapour condenses on the surface of the collector walls, the water being collected in a tank.

2. Automated installation for collecting atmospheric humidity, according to claim 1, **characterized by** the fact that in order to lower the temperature of the collector walls (12) it uses water cooled in a coil (16) of copper pipes placed horizontally underground and recirculated by a recirculation pump (17) through other coils (15) of copper pipes which are in contact with the inner faces of the collector walls (12).

3. Automated installation for collecting atmospheric humidity, according to claim 1, **characterized by** the fact that in order to increase the amount of water obtained by condensation, each vertical tube (14) has at the top two branches oriented towards the collector walls (12), in each branch being mounted some elbows (18) that can rotate around their axes, to adjust the exit angle (α) of the air jets in relation to the surface of the collector walls (12).

## Patentansprüche

1. Automatisierte Anlage zur Erfassung der Luftfeuchtigkeit . die nutzt in einem bekannten System mit Solarkollektoren, Vakuumröhren und einem Speicherkessel erhitztes Wasser und wird von Photovoltaikmodulen mit Energiespeicheranlage angetrieben,
bestehend
einer Einheit (IU), die sich in einem Gemüsesolarium befindet ,
einer externen Einheit (EU) die in der Nähe des Solariums befindet sich, bestehend aus zwei Kollektorwänden (12), die in Form des Buchstabens "V" auf einem Rahmen montiert werden und symmetrisch links-rechts in Bezug auf ein horizontales Rohr angeordnet sind, das mit einigen vertikalen Rohren versehen ist, und
die EU Einheit sammelt Feuchtigkeit sowohl aus der Luft innerhalb als auch außerhalb des Solariums, and die IU Einheit nutzt im System mit Solarkollektoren und einem externen Boiler erwärmtes Wasser, um einen Luftstrom zu erzeugen, der die erforderliche Temperatur und Luftfeuchtigkeit liefert, um den Temperatur- und Feuchtigkeitsunterschied zwischen Innen und Außen auszugleichen und somit die Bedingungen für die Kondensation der Luftfeuchtigkeit zu erfüllen.angeordnet sind, jeweils eine Steuereinheit (CU) mit einer laufenden Überwachungs- und Steuerungssoftware, zielt darauf ab, die Luftfeuchtigkeit automatisch zu erfassen,
bei denen Kombinationen von Referenzwerten für Lufttemperatur und Luftfeuchtigkeit vordefiniert sind, die dem Erreichen des Taupunkts entsprechen, die arbeitet nach einem logischen Algorithmus und erfasst erfasst Informationen als elektrische Signale von einem Feuchte- und Temperaturfühler (T1) der auf einer Halterung außerhalb angebracht ist, auf einer externen Halterung, von einem Feuchte- und Temperaturfühler (T2) am Auslass der Rohrleitung der Einheit (IU) sowie von einigen Temperaturfühlern (T3), die mit den Kollektorwandoberflächen in Kontakt stehen,
die elektrische Signale an die Steuereinheit (CU) senden und so den Betrieb der Anlage optimieren, indem sie Informationen über die Temperatur der Kollektorwandoberfläche in Echtzeit übermitteln und diese Informationen verarbeiten, und
wenn die vordefinierten Bedingungen für die Kondensation von Feuchtigkeit aus der Atmosphäre auf der Oberfläche der Sammelwände erfüllt sind (12), steuert den Start der Komponenten der Einheit (IU), sodass aufgrund des Temperatur- und Feuchtigkeitsunterschieds zwischen dem von der Einheit (IU) erzeugten Luftstrom, der Umgebungsluft und der Temperatur der Kollektorwände der Wasserdampf an der Oberfläche der Kollektorwände kondensiert und das Wasser in einem Behälter gesammelt wird.

2. Automatisierte Anlage zur Sammlung von Luftfeuchtigkeit nach Anspruch 1, **dadurch gekennzeichnet, dass** zur Senkung der Temperatur der Kollektorwände (12) Wasser verwendet wird, das in einer Spule (16) aus Kupferrohren gekühlt und von einer Umwälzpumpe (17) durch andere Spulen (15) aus Kupferrohren umgewälzt wird, die mit den Innenflächen der Kollektorwände (12) in Kontakt stehen.

3. Automatisierte Anlage zur Sammlung von Luftfeuchtigkeit nach Anspruch 1, **dadurch gekennzeichnet, dass** zur Erhöhung der durch Kondensation gewonnenen Wassermenge jedes vertikale Rohr (14) oben zwei auf die Kollektorwände (12) gerichtete Abzweige aufweist, in denen jeweils Winkelstücke (18) angebracht sind, die sich um ihre Achsen drehen können, um den Austrittswinkel (α) der Luftstrahlen in Bezug auf die Oberfläche der Kollektorwände (12) anzupassen.

## Revendications

1. Installation automatisée de collecte de l'humidité atmosphérique, qui utilise de l'eau chauffée dans un système connu avec des panneaux solaires à tubes sous vide et une chaudière de stockage et est alimentée par des panneaux photovoltaïques avec un système de stockage d'énergie comprenant
une unité (IU) située à l'intérieur d'une serre maraîchère,
une unité (EU) située à l'extérieur, à proximité de la serre, constituée de deux parois du collecteur disposées en forme de "V" sur un châssis et symétriquement alignées par rapport à un tube horizontal muni de quelques tubes verticaux , et
l'unité EU qui collecte l'humidité de l'air intérieur et extérieur du solarium, et
l'unité IU qui utilise de l'eau chauffée par un système de panneaux solaires et une chaudière de stockage, pour générer un flux d'air assurant une entrée d'air à température et humidité adéquates permetent de compenser la différence de température et d'humidité entre l'intérieur et l'extérieur et ainsi de créer les conditions nécessaires à la condensation de l'humidité atmosphérique,
respectivement une unité de contrôle (CU) équipée d'un logiciel de surveillance et de contrôle en fonctionnement , visant à collecter automatiquement l'humidité atmosphérique ,
dont les combinations de valeurs de référence de température d'air et d'humidité sont prédéfinies pour atteindre le point de rosée,
qui fonctionne selon un algorithme logique, acquiert des informations de type signal électrique provenant d'un capteur d'humidité et de température (T1) placé sur un support extérieur, d'un capteur d'humidité et de température (T2) situé à la sortie de la tuyauterie de l'unité (IU) et des capteurs de température (T3) en contact avec les surfaces des parois du collecteur.
qui transmettent des signaux électriques à l'unité de commande (CU) et optimisent ainsi le fonctionnement de l'installation, en transmettant en temps réel des informations sur la température de la surface de la paroi du collecteur, traite ces informations, et,
si les conditions prédéfinies de condensation de l'humidité atmosphérique sur les parois du collecteur (12) sont réunies, il commande le démarrage des composants de l'unité (IU), de sorte qu'en raison de la différence de température et d'humidité entre le flux d'air généré par l'unité (IU), l'air atmosphérique, la température des parois du collecteur, la vapeur d'eau se condense sur la surface des parois du collecteur, l'eau étant collectée dans un réservoir.

2. Installation automatisée de collecte d'humidité atmosphérique, selon la revendication 1, **caractérisée par le fait que**, pour abaisser la température des parois du collecteur (12), elle utilise de l'eau refroidie dans un serpentin (16) de tuyaux en cuivre placés horizontalement sous terre et recirculée par une pompe de recirculation (17) à travers d'autres serpentins (15) de tuyaux en cuivre qui sont en contact avec les faces intérieures des parois du collecteur (12).

3. Installation automatisée de collecte d'humidité atmosphérique, selon la revendication 1, **caractérisée par le fait que**, pour augmenter la quantité d'eau obtenue par condensation, chaque tube vertical (14) comporte en haut deux branches orientées vers les parois du collecteur (12), dans chaque branche étant montés des coudes (18) qui peuvent tourner autour de leurs axes, pour ajuster l'angle de sortie (α) des jets d'air par rapport à la surface des parois du collecteur (12).
